# EUROPEAN PATENT APPLICATION

(11) **EP 1 574 655 A2**
(43) Date of publication of application: **14.09.2005**
(21) Application number: 05004595.4
(22) Date of filing: 02.03.2005
(51) Int. Cl.: E05F 11/44, E05F 15/16, B60J 1/17

(54) **Window regulator apparatus**

(30) Priority: 09.03.2004 JP 2004065398; 11.03.2004 JP 2004069389
(71) Applicant: AISIN SEIKI KABUSHIKI KAISHA, Aichi-ken, 448-8650 (JP)
(72) Inventor: Isomura, Yukio, c/o Int. Prop. Dept., Kariya-shi Aichi-ken, 448-8650 (JP); Suzuki, Shigeyuki, c/o Int. Prop. Dept., Kariya-shi Aichi-ken, 448-8650 (JP); Saitoh, Takashi, c/o Int. Prop. Dept., Kariya-shi Aichi-ken, 448-8650 (JP)
(74) Representative: TBK-Patent

(57) **Abstract**

A window regulator apparatus includes a housing supporting an electrically driving source, accommodating therein a speed reduction gear mechanism, and secured to an inner panel of a vehicle door; a case formed integrally with the housing and within which installing a driving circuit substrate, the case having a first surface facing the inner panel of the vehicle door and further having an opening defined at a portion of the case being different from the first surface, the opening employed as a means of inserting the driving circuit substrate into the case; a connector connected to the driving circuit substrate, exposed to an area outside the case through the first surface, and facing the inner panel of the vehicle door; and a sealing member supported at the case so as to protect and make fluid-tight a periphery of the connector.

## Description

### FIELD OF THE INVENTION

This invention generally relates to a window regulator apparatus for raising and lowering a window. More particularly, this invention pertains to a window regulator apparatus for vehicle applications.

### BACKGROUND

JP2001-128407A and U.S. Pat. No.5,245,258 disclose conventionally used window regulator apparatuses which are capable of raising and lowering windows. The conventional window regulator apparatus includes a driving mechanism with an electrically driving source, a driving circuit substrate for activating the electrically driving source, a housing secured at an inner panel of a vehicle door, and a case integrally formed with the housing. Specifically, the driving mechanism is configured with the electrically driving source supportably mounted at the inner panel of the vehicle door, and a speed reduction gear mechanism for transmitting, to an operating member operatively associated with a window for a vehicle, driving torque outputted from the electrically driving source. The housing supports and fixes, thereto, the electrically driving source, and houses, therein, the speed reduction gear mechanism. The driving circuit substrate is installed within the case.

In the window regulator apparatus disclosed in JP2001-128407A, an opening is defined at an inner side surface of the case, which rests substantially facing the inner panel for the vehicle door, whereby the driving circuit substrate is installed at a case interior through the opening. A cover fixedly equipped to the case closes the opening defined at the inner side surface of the case. The cover is also employed for the purpose of exposing, to a case exterior, a connector electrically connected to the driving circuit substrate, and is attached with a sealing member capable of sealing and making fluid-tight a periphery of the connector.

In the window regulator apparatus disclosed in U.S. Pat. No.5,245,258, an opening is defined at a peripheral surface of the case, whereby the driving circuit substrate is inserted into a case interior. A cover fixedly equipped to the case closes the opening defined at the peripheral surface of the case. As above, the cover is employed for the purpose of exposing, to a case exterior, a connector electrically connected to the driving circuit substrate.

The driving circuit substrate being installed within the case is, in general, electrically connected to other elements such as an electric power source mounted on a vehicle, various operating switches and a controller. A harness being connected to those elements is hence connected to the connector exposed outside the case. This electric connection between the connector and the harness is implemented through the door inner panel. Therefore, a position of the connector relative to the door inner panel should be highly considered when the vehicle door is established with the door inner panel and the connector.

However, according to the window regulator apparatuses disclosed in the above references, respectively, the connector exposes, via the cover, outside the case. In such circumstances, there may be a danger that a precision for positioning the connector relative to the inner panel is influenced by two factors such as a precision for mounting the housing, which is formed integrally with the case, relative to the inner panel, and a precision for attaching the cover at the case. Accordingly, there may be a possibility of the connector not being mounted at an appropriate position relative to the door inner panel, and vice versa, wherein the vehicle door cannot be established with the door inner panel and the connector, both mounted at appropriate positions.

The present invention has been made in view of the above circumstances, and provides a window regulator apparatus, in which a connector is positioned relative to a door inner panel with a greater degree of positioning precision.

Further, JP2001-55864A discloses a conventional door window regulator apparatus. This door window regulator apparatus includes a lift arm freely and rotatably supported at an inner panel for a vehicle door, one end of the lift arm being operatively associated with a window panel, and a diving mechanism supported at the inner panel, and provided with an eclectically driving source and a speed reduction gear mechanism for transmitting driving torque from the electrically driving source to the lift arm. The window panel is raised and lowered in response to rotation of the lift arm operated by the electrically driving source of the driving mechanism, wherein a window portion of the vehicle door is closed and opened. In such a case, the window panel is raised and lowered along a substantially circular arc as seen from a vehicle door lateral width direction, while the lift arm is rotated along a substantially plan surface as seen from a vehicle door lateral width direction. In this case, a deviance between each path of the window panel and the lift arm is generated. In order to absorb the deviance therebetween, the lift arm is bent flexibly in the vehicle door lateral width direction.

On the assumption that the driving mechanism disclosed in U.S. Pat. No.5,245,258 is applied to the window regulator apparatus disclosed in JP2001-55864A, the case is positioned between the substantially circular arc-shaped path of the lift arm and the inner panel. In such a case, there may be a danger of the lift arm of being subjected to an interference with the case when the lift arm is flexibly bent at the time that the window panel has been raised and lowered. However, if the lift arm position is changed in the vehicle door lateral width direction so as to prevent the interference therebetween, the degree of lateral length of the vehicle door is enlarged, thereby sacrificing an inner space of a vehicle compartment.

Further, JP11 (1999)-93506A discloses a conventional slide unit, in which a guiding member and a slide member made of a synthetic resin for slidably moving at a guiding surface of the guiding member is included. A rubber-made member, or a member made of a synthetic resin being different from the synthetic resin for the slide member, is provided, near the guiding surface slidably in contact with the side surface of the slide ember, at each front surface and rear surface in a slidably moving direction of the slide member. A central portion of, either the rubber-made member, or the synthetic resin-made member, projects. As described above, the slide member is disposed at the guiding surface with the rubber-made ember of the synthetic resin-made member, which is elastically compressed and deformed.

In this type of slide unit, there may be a danger of dust which may penetrate into the guiding surface of the guiding member, and a danger of generating abrasion powder from the worn-out slide member slidably moving at the guiding surface. In such case, abnormal noise may occur between the slide member and the guiding surface of the guiding member.

That is, it may be difficult to prevent occurrence of dust and abrasion powder at the guiding surface when slide member slidably moves at the guiding surface of the guiding member. In the aforementioned slide unit disclosed in JP11 (1999)-93506A, a curved surface is defined near the guiding surface at each of the front and rear surfaces in the slidably moving direction of the slide member. In such circumstances, there is a danger of dust and abrasion powder being generated and caught at the curved surface (R-surface). Accordingly, a foreign material may intervene between the slide member and the guiding surface of the guiding member. In this case, a frictional coefficient between the slide member and the guiding surface of the guiding member may become unstable. Therefore, vibration may be generated due to stick sip, wherein abnormal noise may easily occur.

### SUMMARY OF THE INVENTION

According to an aspect of the present invention, a window regulator apparatus including: a driving mechanism having an electrically driving source supported at an inner panel of a vehicle door and a speed reduction gear mechanism for transmitting a driving torque of the electrically driving source to a lift arm that is operatively associated with a window panel of the vehicle door; and a driving circuit substrate adapted to drive the electrically driving source characterized in further including: a housing fixedly supporting the electrically driving source, accommodating therein the speed reduction gear mechanism, the housing secured to the inner panel of the vehicle door; a case formed integrally with the housing and within which installing the driving circuit substrate, the case having a first surface facing the inner panel of the vehicle door and further having an opening defined at a portion of the case being different from the first surface, the opening employed as a means of inserting the driving circuit substrate into the case; a cover secured to the case and closing the opening; a connector connected to the driving circuit substrate, exposed to an area outside the case through the first surface, and facing the inner panel of the vehicle door; and a sealing member supported at the case so as to protect and make fluid-tight a periphery of the connector.

It is preferable that the case be projected so as to project from the housing, the driving circuit substrate is installed in the case in a lateral width direction of the vehicle door, and the case includes a second surface facing an approximately flat surface-shaped imaginary path of the lift arm pivotably rotated. The second surface is an inclined plane extending from a side of the housing, and inclining towards a side of the first surface.

Further, it is preferable that a slide member, slidably movable at a guiding surface of a guiding member fixed at the vehicle door, is attached to one end of the lift arm. The slide member includes a front surface at a front side in a slidably moving direction of the slide member and a rear surface at a rear side in the slidably moving direction of the slide member, and each of the front surface and the rear surface has at least one surface at a side of the guiding surface slidably in contact with a side surface of the slide member, the at least one surface intersecting with the guiding surface of the guiding member.

### BRIEF DESCRIPTION OF THE DRAWINGS

The foregoing and additional features and characteristics of the present invention will become more apparent from the following detailed description considered with reference to the accompanying drawings, wherein:

Fig. 1 is a plan view illustrating a vehicle door mounting a window regulator apparatus according to a first embodiment of the present invention;

Fig. 2 is a sectional view illustrating the window regulator apparatus taken along line C-C in Fig. 1;

Fig. 3 is a plan view illustrating the window regulator apparatus according to the first embodiment of the present invention;

Fig. 4 is a sectional view illustrating a relevant portion of the window regulator apparatus taken long line D-D in Fig. 3;

Fig. 5 is a plan view illustrating a structure of a window regulator apparatus according to a second embodiment of the present invention;

Fig. 6 is an enlarged view illustrating a slide unit according to the second embodiment of the present invention;

Fig. 7A is an enlarged view illustrating a front surface of a slide member of the slide unit;

Fig. 7B is a cross sectional view illustrating a the slide member;

Fig. 8 is an enlarged view illustrating a partial portion of the slide member; and

Figs. 9A to 9G are enlarged views illustrating other slide members having modified shapes respectively.

### DETAILED DESCRIPTION

Embodiments of the present invention will be described hereinbelow in detail with reference to the accompanying drawings. Certain terminology is used herein for convenience only and is not to be taken as a limitation on the invention. For example, words such as "upper", "lower", "left", "right", "horizontal", "vertical", "upward", "downward", "clockwise", and "counter-clockwise" merely describe the configuration shown in the Figures.

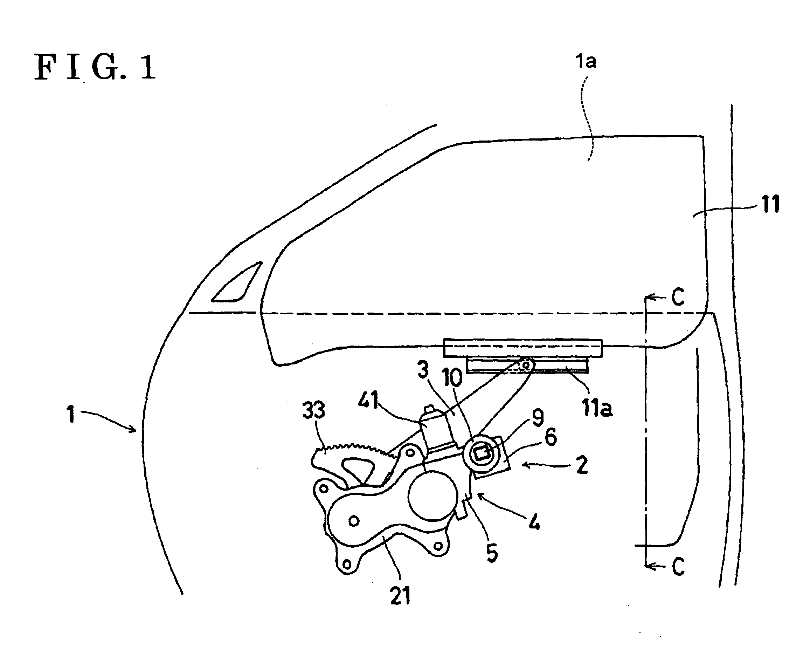

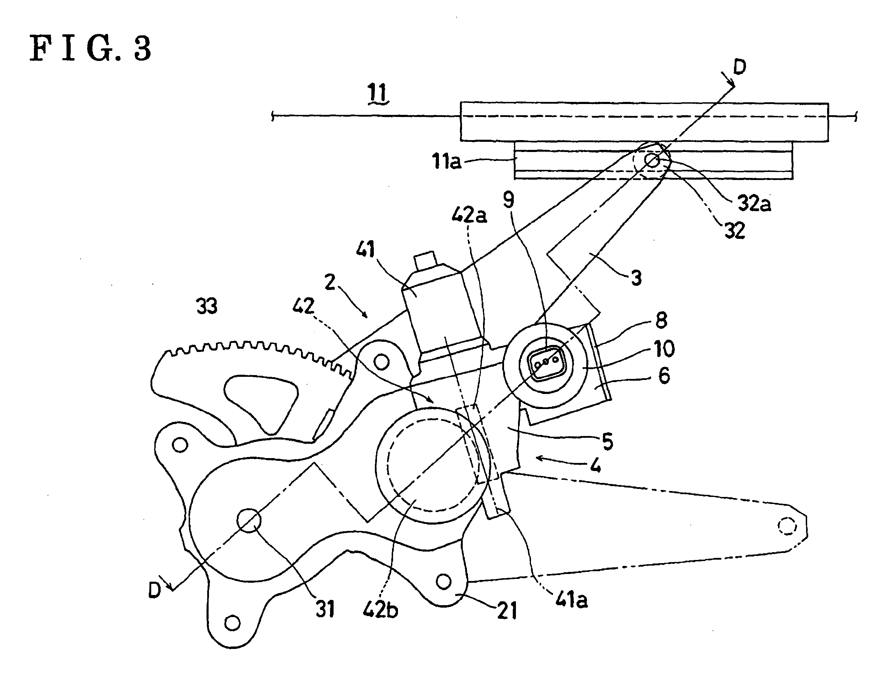

As is illustrated in Figs. 1 to 4, a window regulator apparatus 2 capable of raising and lowering a window (corresponding to a window panel) 11 of a vehicle door 1 according to a first embodiment of the present invention includes a main structure with a supporting bracket 21 secured to an inner panel 12 of the vehicle door 1, a lift arm 3 supported by the supporting bracket 21, and a driving mechanism 4 configured to operate the lift arm 3.

One end of the lift arm 3 is supported by means of the supporting bracket 21 via a pin 31, whereby the lift arm 3 can pivotably rotate about the pin 31. A roller 32 is freely and rotatably equipped at the other end of the lift arm 4 via a pin 32a. This roller 32 is freely and slidably guided by a glass bracket rail 11a, which is secured at a bottom end of the window 11 and extends in a longitudinal direction of the vehicle door 1, i.e., in a left and right direction in Fig. 1. In such a case, the lift arm 3 is operatively linked to the window 11 via the other end of the lift arm 3. Therefore, the window regulator apparatus 2 can raise and lower, in response to a pivotable movement of the lift arm 3, the window 11 between a raised closed position and a lowered open position. Moreover, a sector gear 33 is fixed at the side of the one end of the lift arm 3.

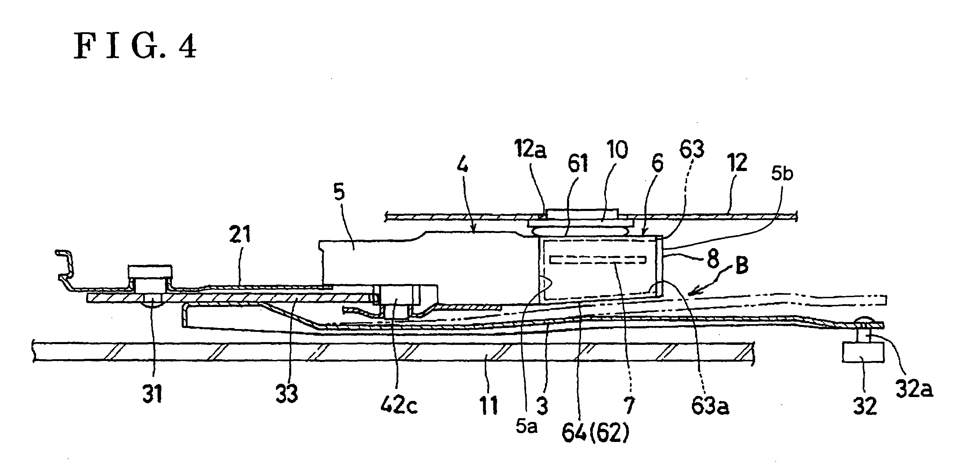

The driving mechanism 4 includes an electric motor (corresponding to an electrically driving source) 41 and a speed reduction gear mechanism 42. The speed reduction gear mechanism 42 incorporates, therein, a worm gear 42a fixed at a rotational shaft 41a of the electric motor 41, a worm wheel gear 42b freely rotatably engaged with the worm gear 42a, and an output pinion gear 42c (illustrated in Fig. 4) freely rotatable in response to rotation of the worm wheel gear 42b. The output pinion gear 42c is meshed with the sector gear 33 of the lift arm 3.

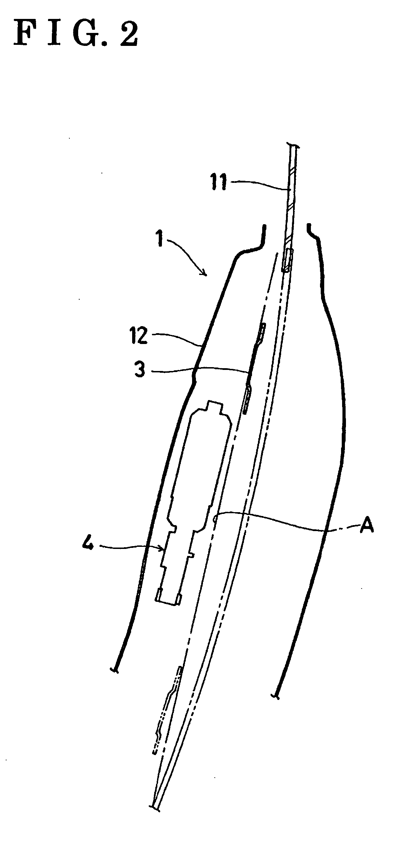

In the window regulator apparatus 2 with the above-described structure, when the electric motor 41 is activated, driving torque generated by the electric motor 41 can be transmitted to the lift arm 3 via the worm gear 42a, the worm wheel gear 42b, the output pinion gear 42c and the sector gear 33, wherein the lift arm 3 pivotably rotates about the pin 31. The pivotable rotation of the lift arm 3 enables the roller 32 at the other end of the lift arm 3 to slide in the longitudinal direction of the vehicle. As described above, the window 11 is raised and lowered, along a guide rail (not shown), between a raised closed position and a lowered open position, whereby a window opening 1a of the vehicle door 1 is closed and opened. In such circumstances, the window 11 is raised and lowered along an approximately circular arc as seen from a lateral width direction of the vehicle door 1, i.e., in a left and right direction in Fig. 2. On the other hand, the lift arm 3 pivotably rotates along an approximately flat surface in view of the lateral width direction of the vehicle door 1. Therefore, for the purpose of absorbing a deviance between a circular arc-shaped path of the window 11 and a flat surface-shaped path of the lift arm 3, it is preferable that the lift arm 3 flexibly rotate and bend in the lateral width direction of the vehicle door 1. As a result, a path of the roller 32, which slidably moves in response to the pivotable rotation of the lift arm 3, is substantially the same as the circular arc-shaped path of the window 11 raised and lowered between the raised closed position and the lowered open position.

The worm gear 42a and the worm wheel gear 42b, both of which are incorporated in the speed reduction gear mechanism 42 of the driving mechanism 4, are installed within the housing 5 made of a resin such as a synthetic resin. The output pinion gear 42c is disposed outside the housing 5 so as to be engaged with the sector gear 3. The driving mechanism 4 assembled as described above is positioned so as to overlap the lift arm 3 in the lateral width direction of the vehicle door 1. The housing 5 is secured at the supporting bracket 21, and the electric motor 41 is fixedly equipped at the housing 5. Therefore, the driving mechanism 4 is unitized with the housing 5, and the window regulator apparatus 2 is unitized with the supporting bracket 21. Because the supporting bracket 21 is secured to the door inner panel 12, the window regulator apparatus 2 is positioned inside the vehicle door 1 between the door inner panel 12 and the window 11, wherein the window regulator apparatus 2 is fixedly mounted at the door inner panel 12. The housing 5 is in contact with an inner-side surface of the supporting bracket 21 so as to be supported by the supporting bracket 21 between the inner panel 12 and the supporting bracket 21. The lift arm 3 is in contact with an outer-side surface of the supporting bracket 21 so as to be supported by the supporting bracket 21 between the window 11 and the supporting bracket 21. The lift arm 3 is bent flexibly in the lateral width direction of the vehicle door 1 so as to give the impression that the lift arm 3 crosses over the supporting bracket 21 in the lateral width direction of the vehicle door 1.

A case 6 made of a resin such as a synthetic resin is formed integrally with the housing 5 and projects therefrom in a rearward direction of the vehicle door 1, i.e., in a left-side direction in Fig. 1. The case 6 accommodates, therein, a driving circuit substrate 7 for driving the electric motor 41. The case 6 is a substantially rectangular-shaped container and is positioned between the door inner panel 12 and the flat surface-shaped path of the lift arm 3 pivotably rotated (an imaginary surface A illustrated in Fig. 2), specifically between the door inner panel 12 and the supporting bracket 21. This case 6 includes an inner-side surface (corresponding to a first surface) 61 facing the door inner panel 12, an outer-side surface (corresponding to a second surface) 62 facing the flat surface-shaped path of the lift arm 3, and a rearward-side surface 63 making an approximately right angle with the inner-side surface 61 and the outer-side surface 62, the rearward-side surface 63 connecting the inner-side surface 61 with the outer-side surface 62. Moreover, the rearward-side surface 63 serves as an end surface projecting toward the housing 5.

The rearward-side surface 63 includes an opening 63a for inserting the driving circuit substrate 7 into the case 6 from an outside until the driving circuit substrate 7 rests therein. A cover 8 is fixed to the rearward-side surface 63 so as to close the opening 63a.

A connector 9 is electrically connected to the driving circuit substrate 7 accommodated within the case 6. Therefore, the driving circuit substrate 7 is electrically connected to a harness connected to the connector 9, and can be supplied with a signal of command from a controller (not shown) mounted on a vehicle, and with electric power, from a battery mounted on a vehicle, so as to drive the electric motor 41. This connector 9 exposes, via the inner-side surface 61, to an exterior of the case 6, so as to be electrically connected to the harness. The connector 9 further, either penetrates or faces, an open bore 12a defined at the inner panel 12 of the vehicle door 1.

Moreover, a rubber boot (corresponding to a sealing member) 10 is provided, surrounding the connector 9 exposed between the inner-side surface 61 of the case 6 and the inner panel 12 of the vehicle door 1, for the purpose of protecting the connector 9 from water or dirt that may have penetrated into the vehicle door 1. The rubber boot 10 is of an approximately accordion-shaped structure.

As described above, the connector 9 is exposed, via the inner-side surface 61 of the case 6 formed integrally with the housing 5 unitized relative to the inner panel 12, to an area outside the case 6, and the open window 12a of the inner panel 12 of the vehicle door 1. Therefore, according to the first embodiment of the present invention, it is possible to position the connector 9 with greater precision relative to the open window 12a of the inner panel 12, thereby facilitating an electric connection of a harness to the connector 9.

As illustrated in Fig. 4, the outer-side surface 62 (corresponding to the second surface) includes an inclined plane 64 extending from a side of the housing 5 and sloping toward a side of the inner-side surface 61 (corresponding to the first surface). Specifically, the outer-side surface 62 inclines as it gradually approaches the inner-side surface 61 from a projecting end 5a of the housing 5 to the other projecting end 5b thereof. Namely, the inclined plane 64 inclines, in the lateral width direction of the vehicle door 1, relative to an imaginary surface A of the flat surface-shaped path of the lift arm 3 pivotably rotated, and relative to an inner surface of the supporting bracket 21. In such case, a predetermined spacing B is defined in the lateral width direction of the vehicle door 1 between the inclined plane 64 and the imaginary surface A of the flat surface-shaped path of the lift arm 3. Therefore, the spacing B makes it possible to prevent the lift arm 3 from interfering with the case 6, even when the pivotably rotated lift arm 3 is bent flexibly towards the inner panel 12 in the lateral width direction of the vehicle door 1.

As has been described above, according to the first embodiment of the present invention, a sufficient, degree of spacing is maintained to permit the lift arm 3 to bend without being subjected to interference by neighboring elements such as the case 6. Therefore, the lift arm 3 and the case 6 can be positioned in the vicinity of each other. In such circumstances, there is no need to allow for a high degree of lateral length in the design of the vehicle door 1, and it is thus possible to avoid sacrificing a space in a vehicle compartment.

According to the first embodiment of the present invention, the lift arm 3 is employed as a member operatively driven by the driving mechanism 4. However, a wire can be employed as an alternative to the lift arm 3.

Moreover, it is preferable that an equalizer arm, which is freely and rotatably supported by the lift arm 3, be additionally provided as to ensure stability in the raising and lowering of the window 11 between a raised closed position and a lowered open position.

Still moreover, according to the first embodiment of the present invention, the driving mechanism 4, the housing 5 and the case 6 are positioned so as to respectively overlap the lift arm 3. However, as far as the driving mechanism 4, the housing 5 and the case 6 are respectively supported, by means of the supporting bracket 21, relative to the inner panel 12, the driving mechanism 4, the housing 5 and the case 6 can be positioned anywhere within the vehicle door 1.

Still moreover, according to the first embodiment of the present invention, the connector 9, either penetrates or faces, the open window 12a of the inner panel 12 of the vehicle door 1. However, the connector 9 does not always have to, either penetrate or face, the open window 12a of the inner panel 12, as long as the connector 9 is positioned in the vicinity of the open window 12a.

Still moreover, according to the first embodiment of the present invention, the inclined surface 64 is provided over an entire area of the outer-side surface 62. Alternatively, the inclined surface 64 can be provided at a portion of the outer-side surface 62 near the rearward-side surface 63.

The window regulator apparatus according to the present invention is not limited to the above-described structures and functions, and the following structures and functions can be applied.

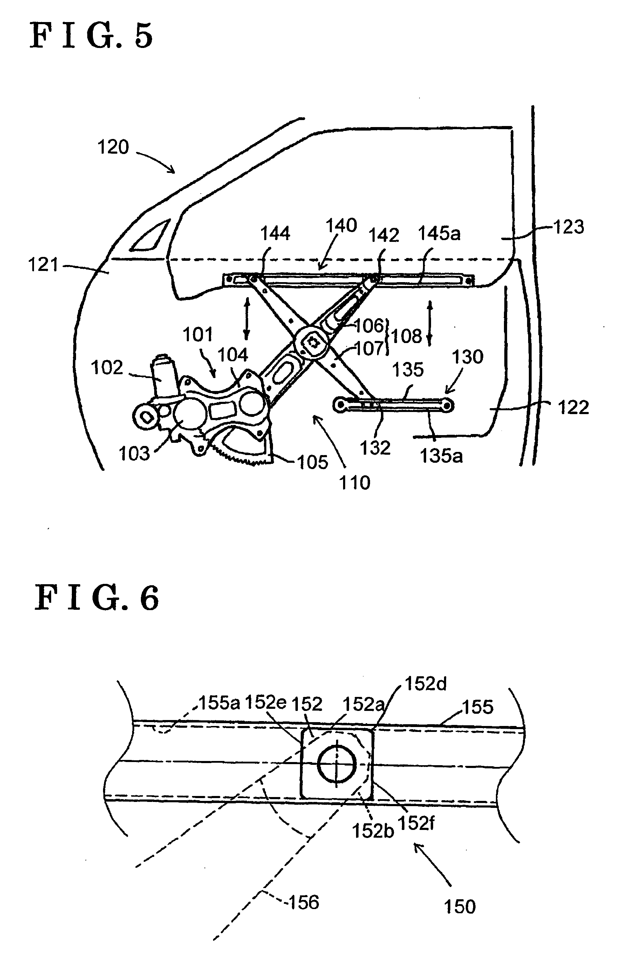

Fig. 5 illustrates a window regulator apparatus 110 according to a second embodiment of the present invention. This window regulator apparatus 110 is preferably applied to a vehicle. The structures and functions of the window regulator apparatus 110 are substantially identical to those of the window regulator apparatus 2, and so explanation thereof will be omitted herein. The window regulator apparatus 110 is mounted between an outer panel 121 and an inner panel 122 for a vehicle door 120. A window 123 is at least partially stored in the vehicle door 120 and positioned above the window regulator apparatus 110. The window 123 is raised and lowered, by means of the window regulator apparatus 110, between a raised closed position and a lowered open position.

The window regulator apparatus 110 is provided with a drive unit 101 secured in the vehicle door 120. Specifically, the drive unit 101 incorporates, therein, a motor (corresponding to an electrically driving source) 102, a speed reduction mechanism (corresponding to a speed reduction gear mechanism) 103 engaged with an output shaft (not shown) of the motor 102, a base plate 104 fixedly supporting the motor 102 and the speed reduction mechanism 103, and a driven gear 105 engaged with the speed reduction mechanism 103 and rotatably attached at the base plate 104. The speed reduction mechanism 103 is provided with a pinion gear (not shown) therein.

One end of a main arm 106 is operatively fixed at the base plate 104 and the driven gear 105 so that the main arm 106 is pivotably rotated. The other end of the main arm 106 extends obliquely upward as illustrated in Fig. 5, and rests below the window 123. An intermediate portion of a sub-arm 107 is axially supported at an intermediate portion of the main arm 106. One end of the sub-arm 107 extends obliquely downward as illustrated in Fig. 6. The other end of the sub-arm 107 extends obliquely upward as illustrated in Fig. 5, and rests below the window 123. As aforementioned, an X-shaped arm (corresponding to a lift arm) 108 is structured with the main arm 106 and the sub-arm 107.

A first slide member 132 is equipped at the one end of the sub-arm 107 of the X-shaped arm 108, while second slide members 142 and 144 are respectively equipped at the other ends of the main arm 106 and the sub-arm 107. The first slide member 132 is slidably movable at a first guiding surface 135a of a first guiding member 135 secured at a bottom portion of the inner panel 122 of the vehicle door 120. As aforementioned, a first slide unit 130 is structured with the first sliding member 132 and the first guiding member 135. The second slide members 142 and 144 are slidably movable at a second guiding surface 145a of a second guiding member 45 secured at a bottom portion of the window 123. As aforementioned, a second slide unit 140 is structured with the second sliding members 142 and 144 and the second guiding member 145.

As described above, the window regulator apparatus 110 according to the second embodiment of the present invention is provided with the drive unit 101, the first slide unit 130, the second slide unit 140, and the X-shaped arm 108.

Next, explained below are the structures of the first and second slide units 130 and 140. The structure of the first slide unit 130 is substantially the same as the one of the second slide unit 140. Therefore, the structure of each is explained below with reference to a slide unit 150 illustrated in Fig. 6.

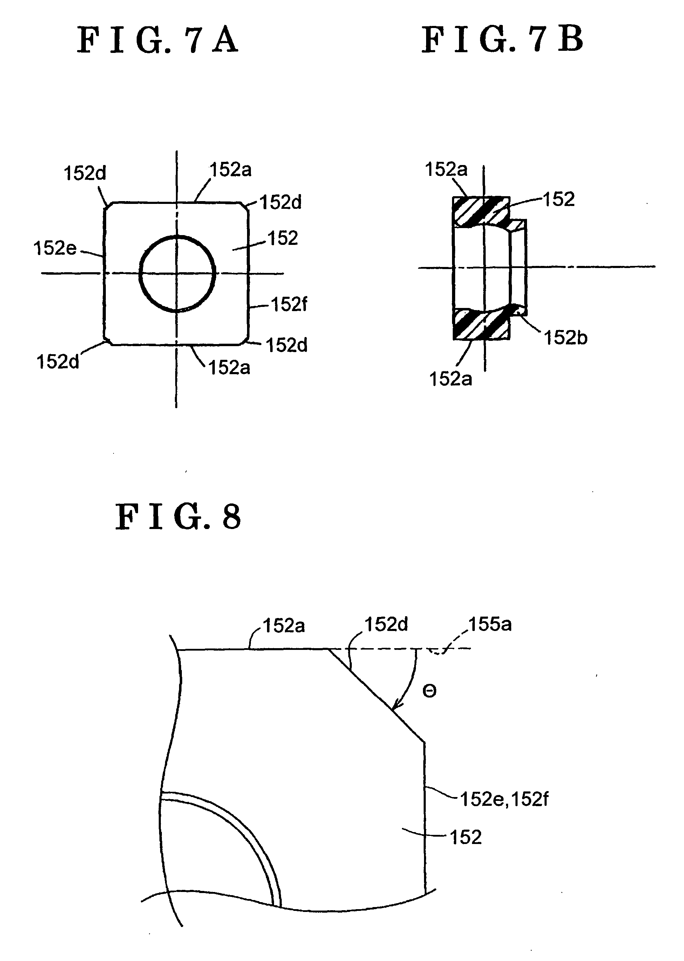

In the slide unit 150 illustrated in Fig. 6, in the same manner as the first and second slide units 130 and 140, a slide member 152 is slidably movable on a guiding surface 155a of a guiding member 155. Here, the slide member 152 corresponds to the first slide member 132 and the second slide members 142 and 144. The guiding member 155 corresponds to the first guiding member 135 and the second guiding member 145. The guiding surface 155a corresponds to the first guiding surface 135a and the second guiding surface 145a. The guiding member 155 possesses an approximately reverse-C shaped structure. At least upper and lower side surfaces 152a and a bottom surface 152b of the slide member 152 is slidably in contact with the guiding surface 155a of the guiding member 155. In such case, the slide member 152 is closed around by the guiding surface 155 of the guiding member 155, and is slidably movable in response to rotation of a slide arm 156 (corresponding to the lift arm such as the main arm 106 and the sub-arm 107). Specifically, the bottom surface 152b of the slide member 152 is provided in a convex manner in the approximately reverse-C shaped guiding member 155 and is slidably in contact with the guiding surface 155a of the guiding member 155, as illustrated in Fig. 7B. Therefore, the side surfaces 152a and the bottom surface 152b of the slide member 152 are slidably in contact with the guiding surface 155a of the guiding member 155.

Specifically as illustrated in Figs. 6 and 7A, the slide member 152 includes a front surface 152e at a front side in a slidably moving direction thereof, and a rear surface 152f at a rear side in the slidably moving direction thereof. Each of the front and rear surfaces 152e and 152f has, at the guiding surface 155a slidably in contact with the side surface 152a of the slide member 152, at least one flat surface 152d intersecting with the guiding surface 155a. Namely, as is apparent from Fig. 7, each of the front and rear surfaces 152e and 152f has at least one surface 152d making a sharp angle with the guiding surface 155a slidably in contact with the side surface 152a of the slide member 152. As described above, the front and rear surfaces 152e and 152f of the slide member 152 forms an approximately convex shape.

The slide member 152 can be made of a resin such as polyacetal resin, nylon resin and polytetrafluoro-ethylene resin. Moreover, various combinations of such resins and additives such as lubricants, e.g., graphite, molybdenum disulfide and talc can be selected to make the slide member 142. More specifically, the slide member 152 can be made of a material of AW-09 series (polyacetal resin) or M90 series, made by Polyplastics Co., Ltd.

### Test

Inventors of the present invention have designed the slide unit 150 with the above-described structure, and also have prepared the slide member 152 made of a resin of AW-09 series (polyacetal resin) made by Polyplastics Co., Ltd. Polyacetal resin possesses attributes capable of contributing preferable slidability of the slide member 152, and also capable of facilitating the slide member 152 being worked with high precision. When preparing the slide member 152 made of polyacetal resin, the flat surface 152d of each of the front and rear surfaces 152e and 152f is designed to make an angle θ relative to a tangential line at which the side surface 152a of the slide member 152 comes in contact with the guiding surface 155a of the guiding member 155. Under Test 1, the angle θ is designed at 0 degree. Under Test 2, the angle θ is designed at 10 degrees. Under Test 3, the angle θ is designed at 30 degrees. Under Test 4, the angle θ is designed at 45 degrees. Under Test 5, the angle θ is designed at 90 degrees. Under Test 1, each of the front and rear surfaces 152e and 152f is formed with a curved surface (i.e., an R-surface) at a side of the guiding surface 155a of the guiding member 155. Therefore, the angle θ of the slide member 152 under Test 1 can be 0 degree, or be approximated to 0 degree. It is preferable that R-surface be generated with a chamfer with an inner diameter being and greater than 0 mm and less than 0.5 mm.

The slide member 152 prepared for each Test 1 to 5 can be slidably moved on the guiding surface 155a of the guiding member 155, the guiding surface 155a to which grease and dust are applied at an appropriated fixed amount, so as to verify whether or not abnormal noise might be occurred due to stick slip. A response experiment performed as described above has taught as summarized in Table 1, with a symbol "N" for the test at which noise is not recognized physically, and with a symbol "Y" for the test at which noise is recognized physically.

**Table 1**

| Test | 1 | 2 | 3 | 4 | 5 |
|---|---|---|---|---|---|
| Angle (θ) | 0 | 10 | 30 | 45 | 90 |
| Test Result | Y | Y | N | N | N |

As summarized above, abnormal noise is recognized physically from Tests 1 and 2, while abnormal noise is not recognized physically from Tests 3, 4 and 5.

### Extensive Analysis

According to the inventors' perspective, in terms of the slide member 152 under each Test 1 and 2, the slide member 152 acts on dust at the guiding surface 155a of the guiding member 155, and catches the dust. Therefore, the inventors are afraid that there may be a possibility of dust of intervening between the side surface 152a of the slide member 152 and the guiding surface 155a of the guiding member 155. In such circumstances, there may be a danger of a frictional coefficient between the side surface 152a and the guiding surface 155a becoming unstable, and moreover a danger of vibration occurred due to stick slip, whereby abnormal noise may occur.

On the other hand, in terms of the slide member 152 under each Test 3, 4 and 5, the slide member 152 is manufactured to have an angle θ, which is defined from, on the one hand, a tangential line at which the side surface 152a of the slide member 152 and the guiding surface 155a of the guiding member 155 come into contact, to, on the other hand, the surface 152d of the slide member 152, exceeding 110 degrees and less than 180 degrees. In such case, the inventors believe that dust at the guiding surface 155a of the guiding member 155 can be cut out by the surface 152d of the slide member 152. The inventors hence believe that dust would not rest easily between the side surface 152a and the guiding surface 155a. Therefore, it is possible to stabilize a frictional coefficient between the side surface 152a of the slide member 152 and the guiding surface 155a of the guiding member 155, thereby enabling to restrain a degree of vibration produced due to stick slip, and more over enabling to restrain noise occurrence.

As described above, according to the second embodiment of the present invention, it is possible, even when dust rests between the slide member 152 and the guiding member 155, to restrain vibration occurred due to stick slip, and to restrain occurrence of noise.

When the slide unit 150 described above is employed as the first and second slide units 130 and 140 of the window regulator apparatus 150 for the vehicle door 120, it is possible to restrain vibration produced due to stick slip from being transmitted to the vehicle door 120. Therefore, it is possible to raise and lower the window 123 with an improved degree of smoothness and with a less degree of noise volume.

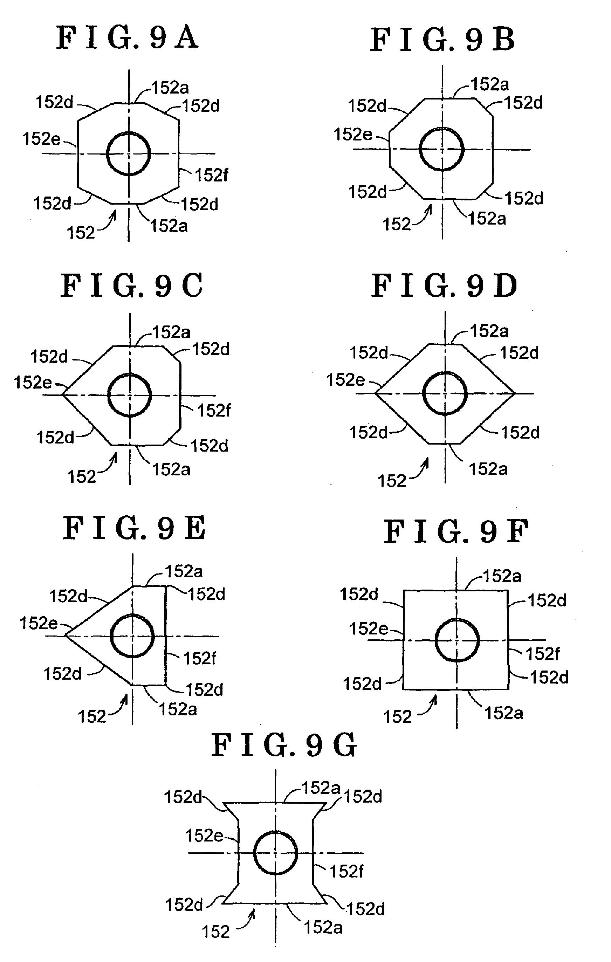

The surface 152d intersecting with the guiding surface 155a of the guiding member 155 is not limited to the above, and the following surfaces can be applied, as illustrated in Figs. 9A to 9G.

The slide member 152 illustrated in Fig. 9A possesses a substantially octagon-shaped structure with the surfaces 152d at a large degree. The slide member 152 illustrated in Fig. 9B possesses a substantially octagon-shaped structure with the surface 152ds making an angle θ, which is different from the above angles in Table 1, relative to the tangential lines. The slide member 152 illustrated in Fig. 9C possesses a substantially heptagon-shaped structure with the surfaces 152d being in contact with either the front surface 152e or the rear surface 152f (the front surface 152e herein). The slide member 152 illustrated in Fig. 9D possesses a substantially hexagon-shaped structure with the surfaces 152d being in contact with both the front surface 152e and the rear surface 152f. The slide member 152 illustrated in Fig. 9E possesses a substantially pentagon-shaped structure with the surfaces 152d being in contact with one of the front surface 152e and the rear surface 152f and with the other surfaces 152d which make a right angle with the tangential lines. The slide member 152 illustrated in Fig. 9F possesses a substantially square-shaped structure with all the surfaces 152d which make a right angle with the tangential lines and serve as the front and rear surfaces 152e and 152f. The slide member 152 illustrated in Fig. 9G possesses a substantially octagon-shaped structure with all the surfaces 152d which make an angle θ exceeding 90 degrees and less than 180 degrees, wherein the front surface 152e with the corresponding surfaces 152d forms a concave-shaped structure, and the rear surface 152f with the corresponding surfaces 152d likewise forms a concave-shaped structure.

Moreover, the slide member 152 can possesses a structure combined with the above described structures. Further, the slide unit 150 can be structured with the less number of components, thereby enabling to reduce manufacturing cost.

According to the second embodiment of the present invention, the above-described slide unit 150 is applied as the first and second slide units 130 and 140 of the window regulator apparatus 110. Alternatively, the slide unit 150 can be employed as a slide unit for other usages such as a machine tool, a residence facility and a heavy equipment.

The principles, the preferred embodiments and mode of operation of the present invention have been described in the foregoing specification. However, the invention which is intended to be protected is not to be construed as limited to the particular embodiment disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.
A window regulator apparatus includes a housing supporting an electrically driving source, accommodating therein a speed reduction gear mechanism, and secured to an inner panel of a vehicle door, a case formed integrally with the housing and within which installing a driving circuit substrate, the case having a first surface facing the inner panel of the vehicle door and further having an opening defined at a portion of the case being different from the first surface, the opening employed as a means of inserting the driving circuit substrate into the case; a connector connected to the driving circuit substrate, exposed to an area outside the case through the first surface, and facing the inner panel of the vehicle door; and a sealing member supported at the case so as to protect and make fluid-tight a periphery of the connector.

## Claims

1. A window regulator apparatus (2,110) including: a driving mechanism (4, 101) having an electrically driving source (41,102) supported at an inner panel (12, 122) of a vehicle door (1, 120) and a speed reduction gear mechanism (42, 103) for transmitting a driving torque of the electrically driving source (41, 102) to a lift arm (3, 108) that is operatively associated with a window panel (11, 123) of the vehicle door (1, 120); and a driving circuit substrate (7) adapted to drive the electrically driving source (41, 102) **characterized in** further comprising:
a housing (5) fixedly supporting the electrically driving source (41, 102), accommodating therein the speed reduction gear mechanism (42, 103), the housing (5) being secured to the inner panel (12,122) of the vehicle door (1,120);
a case (6) formed integrally with the housing (5) and within which installing the driving circuit substrate (7), the case (6) having a first surface (61) facing the inner panel (12, 122) of the vehicle door (1, 120) and further having an opening (63a) defined at a portion of the case (6) being different from the first surface (61), the opening (63a) being employed as a means of inserting the driving circuit substrate (7) into the case (6);
a cover (8) secured to the case (6) and closing the opening (63a);
a connector (9) connected to the driving circuit substrate (7), exposed to an area outside the case (6) through the first surface (61), and facing the inner panel (12, 122) of the vehicle door (1, 120); and
a sealing member (10) supported at the case (6) so as to protect a periphery of the connector (9) in fluid-tight manner.

2. The window regulator apparatus (2, 110) according to claim 1, wherein the case (6) is projected so as to project from the housing (5); the driving circuit substrate (7) is installed in the case (6) in a lateral width direction of the vehicle door (1, 120); and the case (6) includes a second surface (62) facing an approximately flat surface-shaped imaginary path (A) of the lift arm (3) pivotably rotated, and wherein the second surface (62) is an inclined plane (64) extending from a side of the housing (5), and inclining towards a side of the first surface (61).

3. The window regulator apparatus (2, 110) according to any preceding claim, wherein a slide member (132, 142, 144, 152), slidably movable at a guiding surface (155a) of a guiding member (155) fixed at the vehicle door (120), is attached to one end of the lift arm (108), the slide member (132, 152) includes a front surface (152e) at a front side in a slidably moving direction of the slide member (132, 142, 144, 152) and a rear surface (152f) at a rear side in the slidably moving direction of the slide member (132, 142, 144, 152), and each of the front surface (152e) and the rear surface (152f) has at least one surface (152d) at a side of the guiding surface (155a) slidably in contact with a side surface (152a) of the slide member (132, 142, 144, 152), the at least one surface (152d) intersecting with the guiding surface (155a) of the guiding member (155).

4. The window regulator apparatus (2, 110) according to any preceding claim, wherein an angle defined from, on one hand, a tangential line at which the side surface (152a) of the side member (132, 142, 144, 152) and the guiding surface (155a) of the guiding member (155) come into contact, and to, on an other hand, the at least one surface (152d) of the slide member (132, 142, 144, 152), exceeds 10 degrees and is less than 180 degrees.

5. The window regulator apparatus (2, 110) according to any preceding claim, wherein the lift arm (108) includes a main arm (106), of which a lower end is connected to the speed reduction gear mechanism (103), and a sub-arm (107) cross-engaged with the main arm (106), and the slide member (132, 142, 144, 152) includes a first slide member (132) provided at a lower end of the sub-arm (107), and further two second slide members (142, 144), one (142) of the two second slide members (142, 144) is provided at an upper end of the main arm (106), and the other (144) of the two second slide members (142, 144) is provided at an upper end of the sub-arm (7).
